# EUROPÄISCHE PATENTSCHRIFT

(11) **EP 0 413 106 B1**
(45) Veröffentlichungstag und Bekanntmachung des Hinweises auf die Patenterteilung: **01.02.1995**
(21) Anmeldenummer: 90111504.8
(22) Anmeldetag: 19.06.1990
(51) Int. Cl.: B62J 11/00

(54) **Zubehör für Fahrzeuge und Befestigungsvorrichtung dafür**
Accessory for vehicles and fastening device therefor
Accessoires pour véhicules et dispositif de fixation à cet effet

(30) Priorität: 22.06.1989 DE 3920441; 17.08.1989 DE 3927086; 15.03.1990 DE 4008211
(43) Veröffentlichungstag der Anmeldung: 20.02.1991
(60) Teilanmeldung: 92120143.0
(73) Patentinhaber: RIXEN & KAUL GmbH, 42699 Solingen (DE)
(72) Erfinder: Rixen, Edgar, D-5650 Solingen (DE); Flammann, Norbert, Dipl.-Ing., D-5650 Solingen (DE)

(56) Entgegenhaltungen:
- DE-A- 2 531 464
- DE-A- 3 126 666
- DE-A- 3 127 685
- DE-A- 3 151 794
- GB-A- 2 128 819

## Beschreibung

Die Erfindung betrifft Zubehör für Fahrzeuge, wie Fahrräder, Kinderwagen und dergleichen und eine Vorrichtung zu deren Befestigung am Fahrzeug.

Als Zubehör kommen in erster Linie Packtaschen, am Fahrradlenker sowie am Fahrradsattel aber auch anderes in erster Linie schweres und vorzugsweise wertvolles Zubehör, wie Werkzeugboxen, batteriebetriebene Lampen etc. in Frage, also Zubehör, das an Fahrrad oder Kinderwagen häufig befestigt und wieder abgenommen werden muß. Einerseits soll die Befestigung sicher sein, um ein unbeabsichtigtes Lösen des Zubehörs zu vermeiden, andererseits muß das Abnehmen des Zubehörs unproblematisch sein und vorzugsweise mit einer Hand vorgenommen werden können.

Aus der DE-OS 2946353 ist eine Packtasche für Fahrradgepäcktrager mit Befestigung bekannt, die mit einer sich über ihre Rückseite horizontal erstreckende Lippe mit verdicktem Ende in ein am Gepäckträger befestigtes, sich in Fahrtrichtung erstreckendes C-förmiges Profil eingeschoben wird. An einer Vertikalstütze des Gepäckträgers wird die Packtasche an ihrem unteren Ende angebunden. Dadurch wird auch ein Herausrutschen der Lippe aus dem C-Profil verhindert. Nachteilig bei dieser Lösung ist, daß das Gewicht der Packtasche während der Zeit des Einschiebens der Lippe in das C-Profil vom Benutzer gehalten werden muß. Das Abnehmen der Gepäcktasche verlangt gleichermaßen Fingerspitzengefühl und beide Hände.

Aus der DE-OS 3126666 ist ein Schloß zum Verriegeln einer Box mit einem Fahrradgepäckträger bekannt. Die Unterseite der Box weist einen Schloßkasten auf, der mit zwei nach unten abkragenden Krallen mit den Querstreben des Gepäckträgers verriegelt wird. Eine der Krallen ist hierzu beweglich und von einem Hebelmechanismus mit einer Handhabe steuerbar ausgebildet.

Nachteilig bei dieser Vorrichtung ist, daß sie auf einen Typ von Gepäckträgern zugeschnitten ist und bei allen anderen Modellen und allen anderen Teilen eines Fahrrades versagt.

Aus der gattungsbildenden GB-PS 2128819 ist ein nachträglich zu montierendes Zubehör bekannt, daß mit einer Rohrschelle am Lenker eines Fahrrades zu befestigen ist. Dieses Zubehör weist einen Adapter und ein Schließstück auf, die zur Anbringung des Zubehörs am Fahrrad mit einander verriegelt werden. Der Adapter ist an der am Fahrradlenker stets verbleibenden Rohrschelle ausgebildet, während das Schließstück am Zubehör vorgesehen ist. Das Zubehör wird auf eine horizontale Führung am Adapter aufgesteckt und ein federbelasteter Riegel, der Teil des Schließstücks am Zubehör ist, hintergreift in der montierten Stellung eine Nase am Adapter.

Nachteilig bei dieser Lösung ist der Aufsteckvorgang des Zubehörs. Beim ersten Teil des Aufsteckvorgangs ist Verkanten möglich und es werden immer zwei Hände benötigt, um das Zubehör zu montieren. Die eine Hand hält das Zubehör und die andere Hand muß das Fahrrad festhalten. Aufgrund der Kürze der gezeigten Führung ist nicht ersichtlich, daß damit auch größere Gepäckstücke befestigt werden könnten.

Der Erfindung liegt deshalb die Aufgabe zugrunde, den Vorgang der Befestigung und des Lösens von Zubehörteilen, die außen an Fahrzeugen angebracht werden, zu vereinfachen und sicherer zu machen.

Die Lösung dieser Aufgabe ist in Anspruch 1 wiedergegeben. Die Erfindung eröffnet dabei die Möglichkeit, aufgelegtes oder angehängtes Zubehör, das bei Stillstand und Normalstellung des Fahrzeugs nicht herunterfällt, zu verriegeln, so daß auch bei unruhiger Fahrt und Schräglage oder bei Springen des Fahrzeugs auf unebener Fahrbahn ein Herabfallen des Zubehörs vermieden wird. Die Verriegelung stellt durch Formschluß sicher, daß ohne Betätigung der Handhabe ein unbeabsichtigtes Lösen des Zubehörs vom Fahrzeug vermieden wird. Die Betätigung der Handhabe und somit des Riegels erfolgt von Hand. Die Handhabe soll dabei vorzugsweise im Griffbereich des Handgriffs angeordnet sein, was eine Einhandbedienung beim Anhängen oder Abnehmen des Zubehörs vereinfacht.

Die frühzeitige Entlastung vom Gewicht des Zubehörs für den Bediener erfolgt durch Einhängen des Zubehörs am Schließstück. Eingehängt wird an einem offenen Gelenk.

Ein Gelenk besteht meistens aus einer Achse und einer Bohrung. Die Bohrung kann von 2 Lagerschalen gebildet werden, so daß die Achse bei einer abgenommenen Lagerschale in radialer Richtung in die andere Lagerschale eingelegt werden kann. Anschließend wird die zweite Lagerschale über die Achse auf die erste Lagerschale aufgesetzt. Die beiden Lagerschalen mit der eingeschlossenen Achse bilden ein geschlossenes Gelenk. Läßt man die zweite Lagerschale weg, weil die bestimmungsgemäßen Kräfte die Achse ohnehin in der ersten Lagerschale zuverlässig positionieren, so bildet die erste Lagerschale mit der Achse ein offenes Gelenk.

Bei der erfindungsgemäßen Lösung ist das offene Gelenk nach oben offen. Die "Achse" des Gelenks ist vorzugsweise waagerecht angeordnet und kann von einem Drahtbügel gebildet werden; jeder Haken, der eine gewisse Schwenkfreiheit hat in der Lagerschale, kann ebenso die "Achse" bilden. Ein oder zwei Kugelzapfen, die in in eine Bohrung eingehängt werden, können gleichermaßen das offene Gelenk bilden. Entscheidend ist, daß nach einem einfachen Einhängvorgang, der zumindest von einem Teil des Gewichtes der Packtasche entlastet, unter Ausnutzung des für die Bedienungsperson verbleibenden Gewichtes der Packtasche auf einer Kreisbahn um die Drehachse des offenen Gelenks die Packtasche in die Position der Verriegelung von Packtasche mit Adapter und Schließstück am Fahrzeug eingeschwenkt wird. Entscheidend ist das Einhängen der Packtasche mit dem Adapter in das offene Gelenk, die vom Gelenk geführte Schwenkbewegung und die Verriegelung am Ende der Schwenkbewegung. Die Verriegelung soll vorzugsweise formschlüssig sein.

Dabei ist es zweitrangig, ob das Schließstück am Fahrzeug oder am Zubehör vorgesehen ist und entsprechend der Adapter an der Packtasche oder am Fahrzeug. Aus Handhabungsgründen soll der Adapter jedoch eher am Zubehör angeordnet sein, da er regelmäßig weniger aufwendig ist, als das Schließstück.

Vorzugsweise ist eine Ausgestaltung der Erfindung nach Anspruch 2 vorgesehen. Dabei wird der Schenkel je nach Ausführung der Tasche von einem Stück des Drahtbügels oder von einem Stück der Seitenwand der Hardbox gebildet. Die Achse oder der Achsersatz sind steif mit dem Verriegelungsstift verbunden. Der Verriegelungsstift kann sich in Umfangsrichtung der Schwenkbewegung erstrecken und eine Hinterschneidung aufweisen, in die der Riegel eingreift oder parallel zur Schwenkachse des Gelenks angeordnet sein, und von dem Riegel hintergriffen werden.

In erster Linie ist daran gedacht, das Zubehör und dessen Befestigung so auszubilden, daß Adapter und Schließstück zwischen einer Seitenwand des Zubehörs und dem Fahrzeug angeordnet sind. Die Befestigung des Zubehörs an einer einzigen Seitenwand hat den Vorzug, daß der Befestigungsvorgang überschaubar ist und dennoch eine Zugänglichkeit der meistens von oben befüllten Packtaschen sichergestellt ist.

Aus Gründen der Handlichkeit und der Unfallverhütung ist die Packtasche bevorzugt nach Anspruch 3 ausgebildet. Die Parallelität zur Seitenwand ist so zu verstehen, daß der Schenkel des Adapters nicht wesentlich vom Zubehör absteht und dadurch den Transport oder die Handhabung des Zubehörs behindert. Die Entriegelung des Zubehörs erfolgt mit Hilfe einer Handhabe, die in senkrechter Richtung betätigt wird. Dabei kann sich die eine Hand an der Handhabe abstützen, während die andere Hand das Zubehör abhebt oder anhängt. Die Weiterbildung der Erfindung nach Anspruch 6 erlaubt eine in der Herstellung einfache Kombination von Adapter und Versteifung des Zubehörs. Dabei muß unter der Last des Gewichtes der Packtasche zunächst nur das Einlegen des Adapters in das offene Gelenk am Schließstück erfolgen. Nachdem die zumindest teilweise Entlastung erfolgt ist, kann die seitliche Positionierung der Packtasche erfolgen, an die sich das Einschwenken und Verriegeln anschließt. Ein aus Draht gebogener Adapter eignet sich besonders gut bei einer Ausführung des Zubehörs als textile oder aus Folie hergestellte Packtasche mit einem meistens aus einem Drahtbügel bestehenden Tragegestell, wobei das Tragegestell und der Adapter integriert sind.

Die Erfindung befaßt sich, wie mit Anspruch 4 verfolgt wird, insbesondere mit der Art der Befestigung von Fahrradzubehör, das die Erschütterungen und Sprünge einer Fahrradfahrt mitmacht und das sich dabei nicht unbeabsichtigt lösen darf. Das beabsichtigte Lösen der Befestigung soll hingegen komfortabel möglich sein.

Als mögliches Zubehör beim Fahrrad kommen Kartenhalter, Werkzeugtaschen oder -boxen und batteriebetriebene Aggregate, die nur bei Bedarf am Fahrrad angebracht werden, in Betracht. Diese können vorteilhaft mit der erfindungsgemäßen Schnellbefestigung und ihren Ausgestaltungen am Fahrrad angebracht werden.

Besonders bei einer radial abkragenden Befestigung von Zubehör an einer meist runden Lenkstange eines Zweirades kann die Einleitung des Drehmomentes in die Lenkstange bei nennenswertem Gewicht des Zubehörs schwierig werden, weshalb nach Anspruch 6 zusätzlich zu einem Haltebügel ein verstellbares Befestigungselement vorgesehen ist, das sich am Vorbau des Zweiradlenkers abstützt und am Zubehör angreift.Damit wird die Verdrehsicherung von Adapter bzw. Schließstück gegenüber dem Lenker, die durch Rohrschellen erfolgen kann, durch ein meist zusätzliches, verstellbares Befestigungselement ergänzt. Durch die verstellbarkeit wird der Einsatz des erfindungsgemäßen Zubehörs bei allen gängigen Lenkern mit Lenkstange und Vorbau sichergestellt. In erster Linie ist vorgesehen,daß das verstellbare Befestigungselement das Zubehör am Lenker formschlüssig verankert, so daß ein allmähliches Absacken des von der Lenkstange abkragend aufgehängten Zubehörs ausgeschlossen werden kann.

Das verstellbare Befestigungselement kann ergänzend eine den Vorbau des Zweiradlenkers untergreifende Brücke aufweisen, die den Vorbau durch geeignete Materialauswahl, z.B. Kunststoff, vor Beschädigungen schützt und die Verstellmittel des Befestigungselements unfaßt. Eine paarweise Verwendung von verstellbaren Befestigungselementen hat den Vorzug symmetrischer Lastverteilung in der Mitte der Lenkstange. Die paarweise vorgesehenen Stellglieder sollen zumindest teilweise die Lenkstange umgreifen und beidseits des Vorbaus an der Lenkstange angeordnet sein. Sie weisen mit Kragarmen von der Lenkstange weg etwa in Richtung der Längserstreckung des Vorbaus und werden von der Brücke, die den Vorbau untergreift, verbunden. Die Brücke kann von einem Kunststoff - Joch oder, in einfachster Ausführung, von einer Metallstange gebildet werden. Eine erste reibschlüssige Befestigung des Zubehörs an einer Lenkerstange umfaßt 2 Schellen, die sich eng um die Längsmitte der Lenkstange beidseits der den Vorbau und die Lenkstange verbindenden, meistens als Klemmschelle ausgebildeten Befestigung der Lenkstange am Vorbau. Das erlaubt eine gedrungene und konzentrierte Bauweise der Zubehörbefestigung.

Eine wesentliche Weiterbildung der Erfindung ist in Anspruch 7 wiedergegeben. Der Begriff "Seil" ist dabei stellvertretend für Seil, Kette oder Band. Eingeschlossen sollen alle Mittel sein, die leicht biegsam aber von hoher Steifigkeit gegen Verformung bei Zugbelastung sind. Bevorzugt ist ein Drahtseil vorgesehen. Unterschiedliche Neigungen des Vorbaus und variierende Durchmesser der Lenkstange werden durch Änderungen der wirksamen Länge des Seils ausgeglichen, so daß ein etwa waagerechtes Abkragen von Adapter bzw. Schließstück von der Lenkstange einstellbar ist. Die Erfindung erlaubt deshalb ein Nachrüsten bei allen gängigen Fahrradlenkern.

Das Seil wird mit seinem einen Ende am Zubehör verankert, über die Lenkstange geführt, unter dem Vorbau hergezogen, auf der anderen Seite des Vorbaus wieder über die Lenkstange geleitet und an das Zubehör zurückgeführt und dort wieder befestigt. Zur Verstellung der Seillänge ist ein Klemmstück vorgesehen, in dem zumindest ein Ende des Seils festgeschraubt wird. Ein derartiges Klemmstück ist zwar dem Grunde nach eine reibschlüssige Befestigung, in der Praxis hat die Klemmverbindung jedoch immer auch einen Formschlußanteil, so daß die Belastbarkeit der Klemmung des Drahtseiles im Klemmstück weniger kritisch ist als die Festigkeit des Klemmstückes selbst. Das Klemmstück ist vorzugsweise unterhalb des Vorbaus angeordnet und verbindet die beiden Trumme des Seils, die von dem Zubehör über die Lenkstange geführt sind. Es kann in der erwähnten Brücke untergebracht sein, die dem Schutz des Vorbaus gegen Beschädigung durch das Drahtseil dient und die eine unauffällige Führung des Drahtseils in der Nähe der Rohrschellen zur Befestigung des Zubehörs an der Lenkstange erlaubt.

Die Erfindung wird im einzelnen anhand der Zeichnung näher erläutert, dabei zeigen :
- Fig. 1 :: einen Fahrradlenker in perspektivischer Darstellung mit Schließstück für einen Packsack
- Fig. 2 :: einen Packsack mit Drahtbügel - Tragegestell im Zusammenwirken mit Fig.1 in Explosivdarstellung;
- Fig. 3 :: einen Schnitt nach Linie III - III in Fig.1;
- Fig. 4 :: eine Prinzipskizze entsprechend Fig.1
- Fig. 5 :: einen Packsack zu Fig. 4
- Fig. 6:: einen Adapter für eine weitere Ausführungsform der Erfindung
- Fig. 7 :: ein Schließstück zu Fig.6
- Fig. 8:: Eine alternative Ausführungsform zu Fig.3.

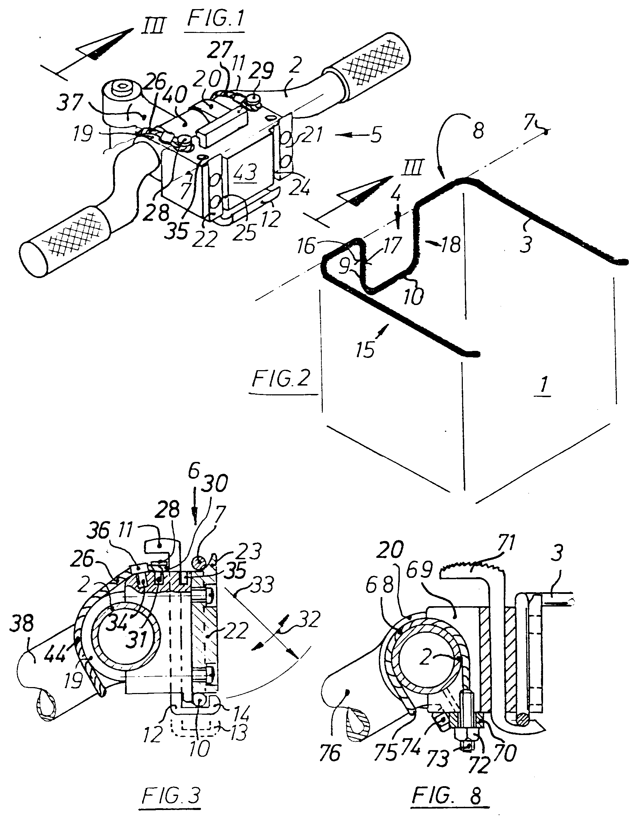

Fig.1, 2 und 3 zeigen eine Fahrradlenkstange 2 mit einem Schließstück 5 zur frei abkragenden Befestigung eines Packsackes 1 an der Lenkstange. Der nur angedeutete Packsack 1 hat als Tragkörper 3 einen Drahtbügel 15, der gabelförmig ausgebildet ist und der in seiner Mitte eine U-förmige, zentrale, nach unten gebogene Verkröpfung 18, die sich parallel zur Rückseite 8 erstreckt und die von zwei in vertikaler Richtung angeordneten Schenkeln 9 und einem Verbindungssteg, der als Verriegelungsstift 10 ausgebildet ist, aufweist. Die Verkröpfung befindet sich auf der dem Fahrradlenker zugewandten Rückseite 8 der Packtasche 1. Die Verkröpfung und der Steg des gabelförmigen Drahtbügels 15 bilden einen Adapter 4 zur Befestigung des Packsackes 1 am Schließstück 5.

Das in Fig.1 gezeigte Schließstück 5 ist mit Rohrschellen 19, 20 mittig an der Lenkstange 2 beidseits der Klemmschelle 40 befestigt. Zusätzlich ist das Schließstück 5 mit zwei Trummen 26, 27 eines Drahtseils mit dem Vorbau 37, 38 verbunden und gegen Verdrehung von Schließstück und Lenkstange relativ zum Vorbau 37 des Lenkers gesichert. Wie insbesondere aus Fig.3 ersichtlich, umschlingt das Drahtseil 44 den Vorbau 38 des Fahrradlenkers unten herum und ist mit seinen Enden am Schließstück 5 befestigt. Die Enden des Drahtseils 44 sind zu Schlaufen 30 umgelegt sind und von einem Seilschloß 36 gesichert. Die Verwendung eines Drahtseils mit der beschriebenen Seilführung führt zu einer formschlüssigen Verbindung von Schließstück 5 und Vorbau 37, 38, die eine sichere Positionierung des Schließstücks mit waagerechter Ausrichtung des angehängten Drahtbügels 15 gewährleistet. Durch die Schlaufen an den Enden des Drahtseils 44 sind Bolzen 28 und 29 in eine Bohrung 31 am Schließstück eingeschraubt. Es sind neben der Bohrung 31 weitere Bohrungen 34, 35 vorgesehen, mit denen die wirksame Länge des Drahtseiles 44 den unterschiedlichen Formen von Lenkstange und Vorbau angepaßt werden. Durch Umstecken der Kopfbolzen 28 oder 29, z.B. in die Bohrung 35 wird die wirksame Länge des Drahtseiles an einen waagerechten Vorbau 37, etwa wie in Fen Fig.1 und 3 gezeigt, angepaßt. Diese Anpassung kann an beiden Enden der Trumme 26, 27 des Drahtseils erfolgen. Bei Verwendung einer Kette oder eines Lochbandes können die zusätzlichen Bohrungen 34, 35 entfallen, weil die Bolzen 28, 29 in unterschiedliche Kettenglieder oder Löchern in dem Band eingesteckt werden können und so eine Anpassung der Länge von Kette oder Lochband erfolgt.

Oben am Schließstück 5 ist eine Handhabe 11 vorgesehen, die durch Niederdrücken den Riegel 12 an der Unterseite des Schließstückes den Verriegelungsstift 10 In die Freigabe-Position 13 bringt. In stirnseitigen Ausnehmungen beidseits der Mitte des Schließstückes 5 sind Spannstücke 21, 22 eingelassen. Dazwischen verbleibt ein Sockel 43, der mit den Spannstücken 21, 22 je eine vertikale Nut 24, 25 bildet. Oben an den Spannstücken sind Fangnasen 23 vorgesehen, hinter die der Drahtbügel 15 eingehängt wird. Die Fangnasen 23 an den Spannstücken 21, 22 bilden im Zusammenwirken mit dem Grund der Nuten 23, 24 ein offenes Gelenk 6 mit einer Drehachse 7, in das der Steg des gabelförmigen Drahtbügels 15 eingehängt wird.

Im eingehängten Zustand wird der Packsack 1 vom Drahtbügel 15 getragen. Die U-förmige Verkröpfung 18 schließt den Sockel 43 des Schließstückes 5 ein. Der Steg des Drahtbügels 15 hängt auf den Spannstücken 21, 22. Ein Verschwenken der Packtasche 1 um die Drehachse 7 des offenen Gelenks 6 wird durch den Riegel 12 in der Schließstellung 14 verhindert. In der eingehängten Stellung des Packsackes 1 wird die seitliche Position durch die Führung der Seiten 16, 17 der Stege 9 in den Nuten 24, 25 gesichert. Mit seinen freien Enden trägt der Drahtbügel die Packtasche. Der Drahtbügel 15 ist aus einem einzigen Stück Draht durch Biegen hergestellt.

Zum Lösen und Abnehmen des Packsackes 1 wird die Handhabe 11 betätigt, die durch eine nicht gezeigte Feder in die Schließposition 14 gedrückt wird. Dadurch gelangt der Riegel 12 in die Freigabeposition 13 und der Packsack wird in Richtung des Pfeiles 32 in die durch den Radius 33 gekennzeichnete Schräglage geschwenkt. Jetzt kann der Packsack nach oben abgehoben werden. Das Anhängen des Packsackes 1 erfolgt in umgekehrter Reihenfolge, wobei die Handhabe nicht betätigt werden muß.

Das Drahtseil 44 verhindert ein unbeabsichtigtes Verschwenken des Schließstücks 5 und vermeidet ein Herunterfallen des Packsackes bei Beschädigung der Rohrschellen 19, 20.

Die in Fig.8 gezeigte Alternativlösung zur Befestigung des Schließstückes 69 an der Lenkstange 2 mit Hilfe des Drahtseiles 68 und einer Brücke 70 eignet sich besonders zum Nachrüsten vorhandener Schließstückbefestigungen. Die Brücke 70 überspannt den Bereich beider Rohrschellen 19, 20 und liegt an der Unterseite des Schließstückes 69 an. Das Drahtseil 68 ist beidseits der Schelle 40 über die Lenkstange 2 geführt und untergreift bei 75 mit seinem Untertrum den Vorbau 76. An den Enden des Drahtseils sind Gewindeabschnitte 73 befestigt, die die Brücke 70 durchgreifen und mit Hilfe der Stellmutter 72 eine präzise Positionierung des Schließstückes 69 erlauben. Die Drahtseilsicherung fixiert die Position des Schließstückes 69 auch dann, wenn die Klemmung der Lenkstange 2 an der Schelle 40 durch die Klemmschraube 74 nicht ausreichen sollte.

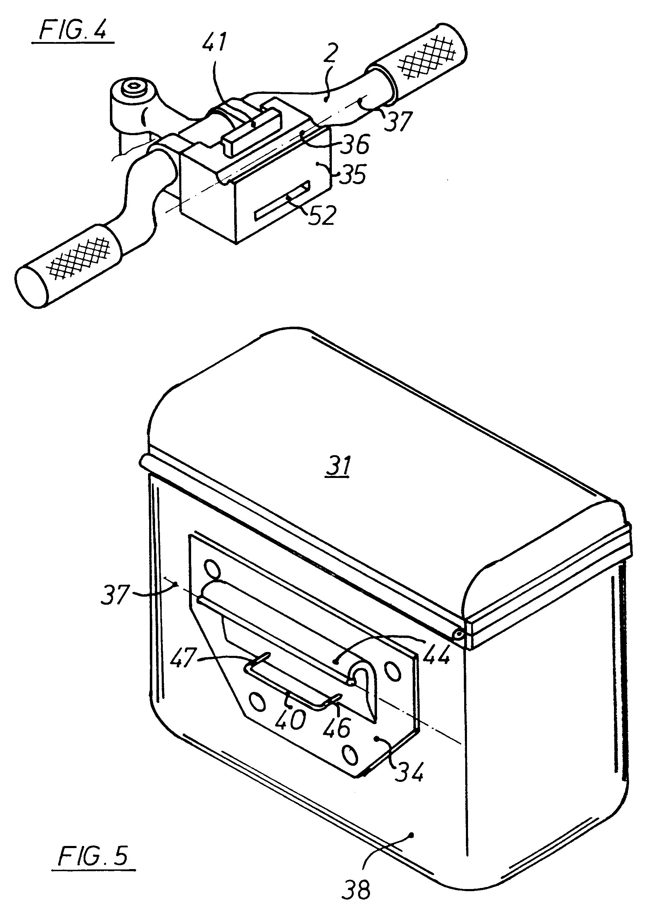

Fig.4 zeigt einen Fahrradlenker 2, an dem vorne ein Schließstück 35 befestigt ist, das an seiner Oberseite ein von einer nach oben offenen Lagerschale 36 gebildetes offenes Gelenk aufweist, und das an seiner Stirnseite einen Schließschacht 52 zeigt, wobei eine Betätigung des nicht gezeigten Riegels durch die Handhabe 41 an der Oberseite des Schließstückes 35 erfolgt. Mit 31 ist eine Hardbox bezeichnet, die mit einem Adapter 34 an dem Schließstück 35 am Fahrradlenker 2 befestigt werden kann.

Der steife Adapter 34 in Fig.5 besteht aus einer Grundplatte an der Rückseite der Hardbox 31 an dem ein langgestrecktes Hakenprofil 44 mit einer kreisrunden Verdickung an ihrem Hakenende vorgesehen ist und befindet sich an der dem Fahrrad zugewandten Rückseite 38 der Hardbox 31. Die Verdickung bildet die Drehachse 37 eines offenen Gelenks in der Lagerschale 36. Unterhalb des Hakenprofils 44 ist ein Verriegelungsbügel 40 vorgesehen. Das Hakenprofil 44 wird mit seinem verdickten Ende in die offene Lagerschale 36 eingehängt. Dabei befindet sich die Hardbox noch in der Schräglage und wird nach dem Einhängen heruntergeschwenkt, so daß der Verriegelungsbügel 40 in den Schließschacht 52 eingreift, wodurch ab dem Augenblick der Verriegelung des Bügels in dem Schließschacht 52 des Schließstücks 35 unbeabsichtigte Schwenkbewegungen der Hardbox verhindert werden. Die Seitenführung der Hardbox 31 übernehmen die seitlichen Schenkel 46, 47 des Verriegelungsbügels 40 im Schließschacht 52.

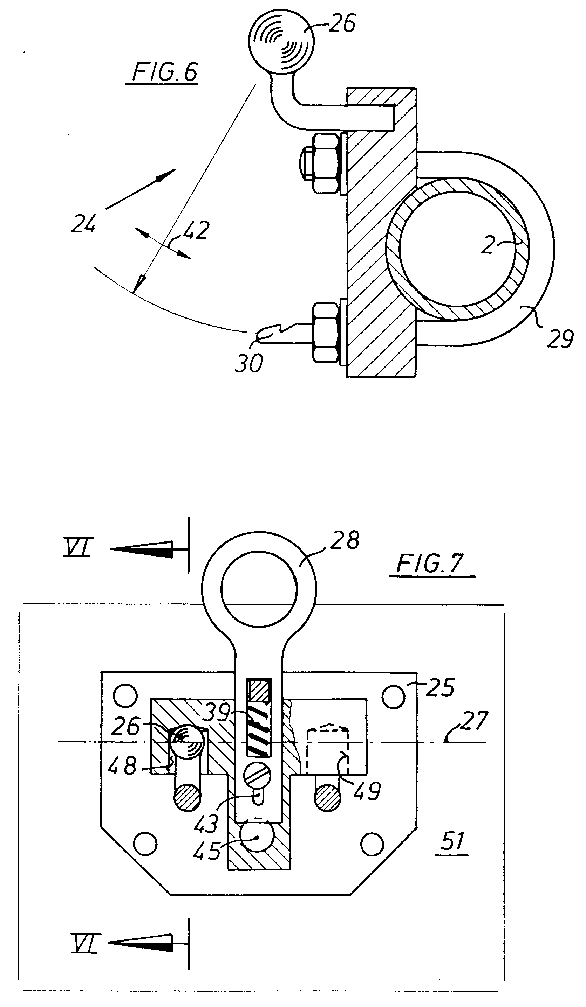

In den Figuren 6 und 7 ist eine weitere Ausführungsform der Erfindung gezeigt, die mit einem Adapter 24 am Lenker 2 und einem Schließstück 25 an einer Packtasche 51 arbeitet. Der Adapter ist mit einer Rohrschelle 29 am Lenker 2 befestigt. Das untere freie Ende der Rohrschelle ist als Verriegelungsstift 30 ausgebildet, während im oberen Bereich des Adapters zwei nach oben abgewinkelte Kugelgelenkstücke 26 abkragen. Die Kugel-Gelenkstücke greifen in die Bohrungen 48, 49 am Schließstück 25 ein. Mittig am Schließstück ist eine Schließbohrung 45 vorgesehen, in die teilweise ein Zugriegel 28 hineinragt, der mit einer Feder 39 in Verriegelungsposition gedrückt wird. Die Endlagen des Zugriegels, der in dem Schließstück geführt ist, werden durch eine Schraube in einem Langloch 43 begrenzt.

Zum Anhängen der Packtasche wird diese mit den beiden Bohrungen 48, 49 in Schräglage auf die Kugel-Gelenkstücke gehängt, um die Drehachse 27 in Richtung des Pfeiles 42 geschwenkt und mit dem Verriegelungsstift 30 in der Schließbohrung 45 sowohl seitlich, als auch in der Schwenklage arretiert.

## Patentansprüche

1. Abnehmbares Zubehör (61) für Fahrzeuge, wie Fahrräder, Kinderwagen und dergl. umfassend
eine Versteifung im gesamten Bereich seiner Befestigung an einem Adapter
eine Verriegelung des Zubehörs am Fahrzeug und
eine Handhabe (11), mit der ein Riegel (12) zwischen einer Freigabe - Position (13) und einer Schließ - Position (14) hin- und herbewegt werden kann,
einen Adapter (4) und ein Schließstück (5), von denen eines am Fahrzeug fest montiert wird, wobei zur Anbringung des Zubehörs beide miteinander verriegelt werden,
gekennzeichnet durch
ein offenes Gelenk (6) zwischen Adapter (4) und Schließstück (5) und dadurch, daß
die Verriegelung im Abstand von der Drehachse (7) des Gelenks (6) erfolgt.

2. Zubehör für Fahrzeuge nach Anspruch 1, dadurch gekennzeichnet, daß die Achse (7) durch einen radial abkragenden Schenkel (9) mit einem Verriegelungsstift (10) verbunden ist, der in das Schließstück (5) eingeschwenkt und vom Riegel (12) hintergriffen wird.

3. Zubehör für Fahrzeuge nach Anspruch 2, dadurch gekennzeichnet, daß sich der Schenkel (9) parallel zur Seitenwand (8) erstreckt.

4. Zubehör für Fahrzeuge nach einem oder mehreren der vorangegangen Ansprüche, dadurch gekennzeichnet, daß der Schenkel (9) und der Verriegelungsstift (10) an einem Drahtbügel (15) ausgebildet sind, an dem die Packtasche (1) aufgehängt oder aufgespannt ist, daß der Drahtbügel im Bereich der Verriegelung U-förmig ausgebildet ist, daß die "U"-Form des Drahtbügels (15) das Schließstück einfaßt und daß der Verriegelungsstift (10) an der U-Form ausgebildet ist.

5. Befestigungsvorrichtung für Zweiradzubehör an einer Zweiradlenkstange nach einem oder mehreren der vorangegangen Ansprüche.

6. Befestigungsvorrichtung nach Anspruch 5 gekennzeichnet durch mindestens einen Haltebügel, mit dem das Zubehör an der Lenkstange abgestützt ist und durch ein verstellbares Befestigungselement, das am Vorbau des Lenkers und am Zubehör angreift.

7. Befestigung für von einer Fahrradlenkstange abkragendes Zubehör nach Anspruch 6, dadurch gekennzeichnet, daß das Befestigungselement als Seil (44) ausgebildet ist.

## Claims

1. Removable accessory 61) for vehicles, such as bicycles, prams and the like, comprising
a reinforcement in the entire region of its securing to an adapter
a means of locking the accessory to the vehicle, and
a handle (11) by means of which a locking bar (12) can be moved to and fro between a released position (13) and a closed position (14),
an adapter (4) and a closing piece (5), one of which is fixedly mounted on the vehicle, both being locked to one another for mounting the accessory,
characterized by
an open joint (6) between adapter (4) and closing piece (5), and in that
locking takes place at a spacing from the axis of rotation (7) of the joint (6).

2. Accessory for vehicles according to Claim 1, characterized in that the axis (7) is associated by a radially protruding shoulder (9) with a locking pin (10) which is pivoted into the closing piece (5) and behind which the locking bar (12) reaches.

3. Accessory for vehicles according to Claim 2, characterized in that the leg (9) extends parallel to the side wall (8).

4. Accessory for vehicles according to one or more of the preceding claims, characterized in that the leg (9) and the locking pin (10) are constructed on a wire bow (15) on which the pack bag (1) is suspended or clamped, in that the wire bow is constructed to be U-shaped in the region of the locking means, in that the "U" shape of the wire bow (15) includes the closing piece, and in that the locking pin (10) is constructed on the U shape.

5. Securing device for two-wheel accessory on a two-wheel steering rod according to one or more of the preceding claims.

6. Securing device according to Claim 5, characterized by at least one holding bow by means of which the accessory is supported on the steering rod and by an adjustable securing element which acts on the front part of the handle bar and on the accessory.

7. Securing means for accessory protruding from a bicycle steering rod according to Claim 6, characterized in that the securing element is constructed as a cable (44).

## Revendications

1. Accessoire démontable pour véhicules, comme des bicyclettes, des voitures d'enfant et similaire, comportant:
- un renforcement dans toute la zone de sa fixation sur un adaptateur,
- un verrouillage de l'accessoire sur le véhicule, et
- une manette (11), avec laquelle on peut déplacer alternativement un verrou (12) entre une position de libération (13) et une position de fermeture (14),
- un adaptateur (4) et une pièce de fermeture (5), dont l'un est monté de façon fixe sur le véhicule, ces deux pièces pouvant être verrouillées ensemble pour l'adaptation sur le véhicule,
caractérisé
- par une articulation ouverte (6) entre l'adaptateur (4) et la pièce de fermeture (5),
- et en ce que le verrouillage se fait à une certaine distance de l'axe de rotation (7) de l'articulation (6).

2. Accessoire pour véhicules suivant la revendication 1, caractérisé en ce que l'axe (7) est relié, par l'intermédiaire d'une branche de U (9), formant radialement collier, à une barrette de verrouillage (10) que l'on fait basculer dans la pièce de fermeture (5) et qui est reprise par derrière par le verrou (12).

3. Accessoire pour véhicules suivant la revendication 2, caractérisé en ce que la branche (9) est disposée parallèlement à la paroi latérale (8).

4. Accessoire pour véhicules suivant l'une quelconque ou plusieurs des revendications précédentes, caractérisé en ce que la branche (9) et la barrette de verrouillage (10) sont réalisées sur un étrier de fil métallique (15), sur lequel on suspend ou on fixe par serrage une sacoche (1), en ce que l'étrier en fil métallique est réalisé en forme de U dans la zone du verrouillage, en ce que la forme en U de l'étrier en fil métallique (15) constitue la bordure de la pièce de fermeture et en ce que la barrette de verrouillage (10) est réalisée sur la forme en U.

5. Dispositif de fixation d'accessoire de bicyclette sur un guidon de bicyclette, suivant l'une quelconque ou plusieurs des revendications précédentes.

6. Dispositif de fixation suivant la revendication 5, caractérisé par au moins un étrier de maintien avec lequel l'accessoire prend appui sur le guidon et par un organe de fixation réglable, qui fait prise sur la structure avant du guidon et sur l'accessoire.

7. Fixation pour accessoire fixé par collier sur un guidon de bicyclette suivant la revendication 6, caractérisée en ce que l'organe de fixation est réalisé sous la forme d'un câble (44).
